# EUROPÄISCHE PATENTSCHRIFT

(11) **EP 3 622 363 B1**
(45) Veröffentlichungstag und Bekanntmachung des Hinweises auf die Patenterteilung: **22.11.2023**
(21) Anmeldenummer: 18717837.1
(22) Anmeldetag: 11.04.2018
(51) Int. Cl.: G05D 1/02, G01C 21/20, B66F 9/075

(54) **VERFAHREN ZUR BESTIMMUNG DER POSITION EINES MOBILTEILS**
METHOD FOR DETERMINING THE POSITION OF A MOBILE ENTITY
MÉTHODE POUR DÉTERMINER LA POSITION D'UN DISPOSITIF MOBILE

(30) Priorität: 10.05.2017 DE 102017004471
(43) Veröffentlichungstag der Anmeldung: 18.03.2020
(73) Patentinhaber: SEW-EURODRIVE GmbH & Co. KG, 76646 Bruchsal (DE)
(72) Erfinder: KLUMPP, Daniel, verstorben (DE)
(86) Internationale Anmeldenummer: PCT/EP2018/025111
(87) Internationale Veröffentlichungsnummer: WO 2018/206151

(56) Entgegenhaltungen:
- WO-A2-2006/065563
- WO-A2-2011/113535
- DE-A1- 10 347 608
- US-A- 5 911 767
- RAINER MAUTZ ET AL: "Survey of optical indoor positioning systems", INDOOR POSITIONING AND INDOOR NAVIGATION (IPIN), 2011 INTERNATIONAL CONFERENCE ON, IEEE, 21. September 2011 (2011-09-21), Seiten 1-7, XP031990140, DOI: 10.1109/IPIN.2011.6071925 ISBN: 978-1-4577-1805-2
- Markus Niederöst, Hans-Gerd Maas: "Entwurf und Erkennung von codierten Zielmarken", ETH Zürich Research Collection - Conference Paper, 31. Dezember 1997 (1997-12-31), XP055492310, Zürich DOI: 10.3929/ethz-a-004332841 Gefunden im Internet: URL:https://www.research-collection.ethz.c h/bitstream/handle/20.500.11850/146246/eth -25192-01.pdf [gefunden am 2018-07-12]
- DIEGO LÓPEZ DE IPIÑA ET AL: "TRIP: A Low-Cost Vision-Based Location System for Ubiquitous Computing", PERSONAL AND UBIQUITOUS COMPUTING, SPRINGER VERLAG, LONDON, GB, vol. 6, no. 3, 5 January 2002 (2002-01-05) , pages 206-219, XP058297977, ISSN: 1617-4909, DOI: 10.1007/S007790200020

## Beschreibung

Die Erfindung betrifft ein Verfahren zur Bestimmung der Position eines Mobilteils und einen Informationsträger zur Durchführung eines Verfahrens.

Es ist allgemein bekannt, dass ein Informationsträger als Aufkleber an einer Position anbringbar ist.

Aus der DE 10 2014 002 150 B3 ist ein Verfahren zur Ermittlung der absoluten Position einer mobilen Einheit bekannt.

Aus der **nachveröffentlichten Veröffentlichung** MaxiCode. In: Wikipedia, die freie Enzyklopädie, **nicht rechtssicher nachvollziehbarer angeblicher** Bearbeitungsstand 15. Februar 2017, 18:22 UTC. URL: https://de.wikipedia.orp/w/index.php
**ist dem deutschen Patent- und Markenamt am 11.1.2018 bekannt geworden, dass auf dieser Internetseite behauptet wird, dass ein MaxiCode bei UPS entwickelt worden sei. Diese Internetseite wurde jedoch inzwischen überarbeitet und mit neuen Behauptungen versehen.**

**Aus der** WO 2006/065563 A2 **ist ein Verfahren zur Positionsbestimmung bekannt.**

**Aus der** WO 2011/113535 A2 **ist ein Verfahren zur Bestimmung der Position eines Fahrzeugs innerhalb einer Anlage bekannt.**

**Aus der** US 5 911 767 A **ist ein Navigationssystem für einen mobileren Roboter bekannt.**

**Aus der Veröffentlichung** von R.Mautz et al., Survey of optical indoor positioning systems", 2011 IEEE international conference on indoor positioning and indoor navigation", p.1-7 **ist ein Navigationsverfahren bekannt.**

**Aus der** DE 103 47 608 A1 **sind winkelcodierte Messmarken bekannt.**

**Aus der Veröffentlichung** von M.Niederösl et al., "Entwurf und Erkennung von codierten Zielmarken", ETH Library Research Collection (1997) **ist eine Erkennung von codierten Zielmarken bekannt.**

**Aus der Veröffentlichung** von D.L. de Ipiña et al., "TRIP: A Low-Cost Vision-Based Location System for Ubiquitous Computing", in: Personal and Ubiquitous Computing Band 6 Nr.3, S. 206-219, Springer Verlag (2002) **ist ein sichtbasiertes Lokalisierungssystem bekannt.**

Der Erfindung liegt daher die Aufgabe zugrunde, ein Verfahren zur Bestimmung der Position eines Mobilteils weiterzubilden, wobei ein möglichst einfach aufgebauter und flächensparend ausgeführter Informationsträger verwendbar sein soll.

Erfindungsgemäß wird die Aufgabe bei dem Verfahren zur Bestimmung der Position eines Mobilteils nach Anspruch 1 gelöst. Wichtige Merkmale der Erfindung bei dem Verfahren zur Bestimmung der räumlichen Position eines Mobilteils, insbesondere eines auf einer Verfahrfläche einer Anlage verfahrbaren Mobilteils, sind, dass das Mobilteil eine Kamera aufweist, mit welcher ein, insbesondere in der Anlage, stationär angeordneter Informationsträger detektierbar ist,
wobei der Informationsträger einen Datenbereich aufweist, insbesondere welcher konzentrisch angeordnete kreisringförmige Spuren aufweist, insbesondere Darstellungen von Informationsbits aufweisende Spuren aufwiest,
wobei der Informationsträger radial innerhalb des Datenbereichs konzentrisch angeordnete Kreisringe, insbesondere Kreise, aufweist,
insbesondere wobei der Datenbereich eine Identitätsinformation aufweist,
wobei in einem ersten Verfahrensschritt vom Mobilteil aus, insbesondere von der Kamera aus, ein Bild des Informationsträgers aufgenommen wird,
in einem zweiten Verfahrensschritt die Identitätsinformation bestimmt wird, in einem dritten Verfahrensschritt aus einem Speicher des Mobilteils der Identitätsinformation zugeordnete Daten ausgelesen werden, wobei die Daten Information der räumlichen Position und räumlichen Ausrichtung des Informationsträgers in der Anlage aufweisen,
in einem vierten Verfahrensschritt aus dem aufgenommenen Bild die Werte der geometrischen Größen der Anordnung der radial innerhalb des Datenbereichs konzentrisch angeordneten Kreisringe und zumindest einer speziellen Umfangsposition des Datenbereichs des Informationsträgers bestimmt werden,
in einem fünften Verfahrensschritt aus den bestimmten Werten der geometrischen Größen und den aus dem Speicher gelesenen Werten der geometrischen Größen die relative räumliche Lage des Mobilteils zum Informationsträger bestimmt wird und unter Berücksichtigung der gespeicherten Werte der räumlichen Lage des Informationsträgers die Position des Mobilteils bestimmt wird.

Von Vorteil ist dabei, dass eine schnelle und einfache Bestimmung der Position ausführbar ist, wobei die Blickrichtung der Kamera sehr einfach aus dem mit der Kamera aufgenommenen Bild bestimmbar ist.

Erfindungsgemäß ist die geometrische Größe der speziellen Umfangsposition der Umfangswinkelwert der Umfangsposition. Von Vorteil ist dabei, dass eine zweite Information zur Bestimmung der Blickrichtung vorhanden ist.

Erfindungsgemäß ist die spezielle Umfangsposition der in Umfangsrichtung größte oder kleinste Umfangswinkel des von einem Synchronisationsmuster überdeckten Umfangswinkelbereichs. Von Vorteil ist dabei, dass eine weitere Information zur Bestimmung der Blickrichtung vorhanden ist und somit die Blickrichtung eindeutig bestimmbar ist. Denn die Blickrichtung ist durch Werte zweier Freiheitgrade festgelegt.

Erfindungsgemäß sind die geometrischen Größen der radial innerhalb des Datenbereichs konzentrisch angeordneten Kreisringe deren im aufgenommenen Bild bestimmten Exzentrizität und größter Durchmesser. Von Vorteil ist dabei, dass somit die Bestimmung der Entfernung und Blickrichtung sehr einfach ausführbar ist.

Erfindungsgemäß ist der Informationsträger eben ausgeführt, insbesondere wobei die Kreisringe konzentrisch zu einer durch einen Mittelpunkt des Informationsträgers durchgehenden Normale der Ebene, insbesondere der den Informationsträger aufnehmenden Ebene, sind, wobei Umfangsrichtung, Umfangswinkel, Radialabstände auf die Normale bezogen sind. Von Vorteil ist dabei, dass die Bestimmung der Entfernung und Blickrichtung eineindeutig und einfach ausführbar ist.

Erfindungsgemäß sind die Kreisringe in Umfangsrichtung jeweils unterbrechungsfrei ausgeführt. Von Vorteil ist dabei, dass eine einfache fehlerarme Erkennung ermöglicht ist.

Erfindungsgemäß Ausgestaltung ist die spezielle Umfangsposition radial außerhalb der Kreisringe angeordnet. Von Vorteil ist dabei, dass somit ein nicht verschwindender Radialabstand dieser Umfangsposition vorhanden ist und daher eine fehlerarme einfache Bestimmung der Blickrichtung und Entfernung ausführbar ist.

Erfindungsgemäß ist auf der radial innersten Spur des Datenbereichs das Synchronisationsmuster und eine Information über den Wert der Bogenlänge der Darstellungen der Information in dem Datenbereich angeordnet. Von Vorteil ist dabei, dass ein Synchronisationsmuster, welches zur Datenübertragung verwendet wird, gleichzeitig eine geometrische Größe, nämlich die Umfangsposition, aufweist und somit zur Bestimmung der Entfernung und Blickrichtung verwendbar ist.

Wichtige Merkmale bei dem Informationsträger zur Durchführung eines vorgenannten Verfahrens sind, dass die Kreisringe radial innerhalb eines Datenbereichs des Informationsträgers angeordnet sind, wobei die spezielle Umfangsposition radial außerhalb der Kreisringe angeordnet ist. Von Vorteil ist dabei, dass kein zusätzlicher Raumbereich für die Kreisringe bereit zu stellen ist, sondern der sowieso vorhandene vom Datenbereich umgebene Raumbereich genutzt wird.

Weitere Vorteile ergeben sich aus dem Unteranspruch. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand der Abbildung näher erläutert:

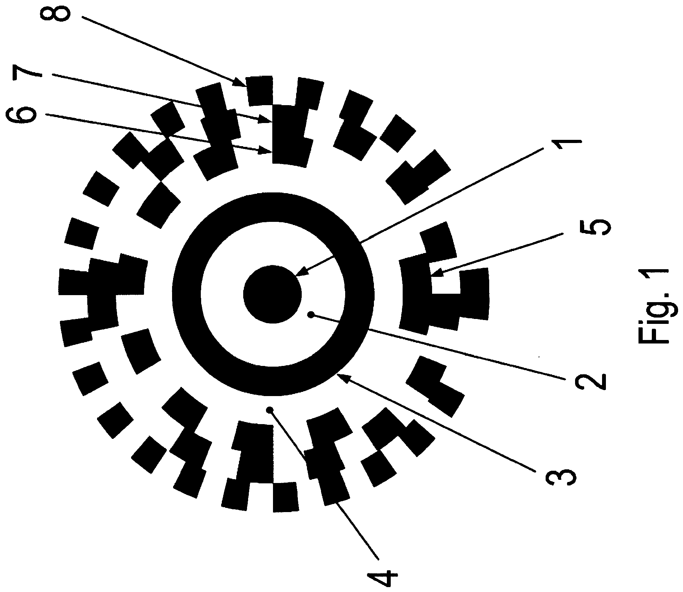

In der Figur 1 ist ein Informationsträger in Draufsicht dargestellt.

Mittels des erfindungsgemäßen Verfahrens wird die räumliche Position eines auf einer Verfahrfläche einer Anlage bewegbaren Mobilteils bestimmt. Hierzu weist das Mobilteil eine Kamera auf, mit welcher ein Bild des stationär in der Anlage angeordneten Informationsträgers aufgenommen wird.

Das Bild wird in einem Rechner des Mobilteils ausgewertet.

Hierbei wird einerseits eine Identitätsinformation des Informationsträgers bestimmt und andererseits werden Werte geometrischer Größen des Informationsträgers bestimmt. Mit diesen bestimmten Werten wird unter Berücksichtigung von in einem Speicher des Rechners gespeicherten Werten die relative räumliche Lage des Mobilteils bezogen auf den Informationsträger bestimmt.

Dabei ist wichtig, dass der Informationsträger eben ausgeführt ist, beispielsweise als bedrucktes Papier oder bedruckter Aufkleber.

Die räumliche Position des Informationsträgers innerhalb der Anlage und die räumliche Ausrichtung des Informationsträgers ist im Speicher des Rechners hinterlegt.

Somit ist durch vektorielle Addition der vom Rechner bestimmten relativen räumlichen Lage zur im Rechner gespeicherten räumlichen Position die räumliche Position des Mobilteils bestimmbar.

Zur Bestimmung der relativen räumlichen Lage des Mobilteils wird aus dem aufgenommenen Bild des Informationsträgers die Blickrichtung und Entfernung zwischen Mobilteil und Informationsträger bestimmt.

Hierzu weist der Informationsträger einen ringförmigen Datenbereich auf, der in Figur 1 mehrere kreisförmige, zueinander konzentrisch angeordnete, ringförmige Spuren aufweist, welche die Darstellung jeweiliger Datenbits enthalten Hierzu ist für jedes Datenbit eine konstante Bogenlänge verwendet. Die Datenbits in verschiedenen Spuren, also die auf verschiedenen Radialabständen sich befindenden Datenbits, weisen unterschiedliche Umfangswinkelweiten auf.

In Figur 1 weist der Datenberiech als Spuren eine erste ringförmige Spur auf, nämlich den Formatkreis 6, und zwei weitere radial diesen umgebende Spuren, nämlich die Datenkreise 7 und 8. Der Formatkreis 6 weist ein Synchronisationsmuster 5 auf, welches in Figur 1 einen als in Umfangsrichtung am längsten geschwärzten Umfangswinkelbereich erkennbar ist. Das Synchronisationsmuster umfasst vorzugsweise auch nicht geschwärzte Bereiche und ist eindeutig erkennbar. Außerdem legt der Formatkreis 6 die Bogenlänge der Darstellungen der Datenbits der Datenkreise 7 und 8 fest.

Durch Erkennen des Synchronisationsmusters 5 ist ein Anfangspunkt des Synchronisationsmusters 5 bestimmbar.

Bei schräger Draufsicht der Kamera auf den Informationsträger erscheinen die innerhalb des Datenbereichs angeordneten Kreise 1, 2, und 3 elliptisch. Abhängig von der Exzentrizität dieser Ellipsen wird somit eine erste Winkelinformation für die Blickrichtung der Kamera bestimmt. Durch Detektion des Synchronisationsmusters 5 und somit durch Bestimmung der Lage des Anfangspunktes des Synchronisationsmusters 5 wird eine weitere Winkelinformation für die Blickrichtung der Kamera bestimmt.

Durch die geometrische Ausdehnung der Kreise, beispielsweise durch den maximalen Durchmesser des detektierten dritten Kreises 3, ist der Abstand zwischen Kamera und Informationsträger bestimmbar.

Somit wird durch Bildauswertung zusammen mit Mustererkennung und der genannten Bestimmung der Exzentrizität, des Anfangspunkts und der Ausdehnung die relative räumliche Lage des Mobilteils bezogen auf den Informationsträger bestimmt.

Bei dieser Bestimmung wird die Information über die wirkliche Ausdehnung, also über den Durchmesser des dritten Kreises 3 auf dem Informationsträger, aus dem Speicher des Rechners gelesen und zur Entfernungsbestimmung verwendet.

In Weiterbildung sind weitere Daten zur genaueren Bestimmung der relativen räumlichen Lage verwendbar. Beispielsweise wird hierzu nicht nur der dritte Kreis 3 ausgewertet, sondern auch weitere Kreise (1, 2). Dabei wird deren Exzentrizität ebenfalls bestimmt und aus allen bestimmten Werten der Exzentrizität ein Mittelwert oder ein gewichteter Mittelwert gebildet, aus dem dann die erste Winkelinformation für die Blickrichtung der Kamera bestimmt wird.

Ebenso sind weitere Punkte des Synchronisationsmusters und/oder des Formatkreises 6 verwendbar und die zweite Winkelinformation für die Blickrichtung der Kamera genauer zu bestimmen. Je mehr solcher weiterer Punkte verwendet werden, desto höhere Genauigkeit ist erreichbar.

### Bezugszeichenliste

1 erster Kreis
2 zweiter Kreis
3 dritter Kreis
4 vierter Kreis, insbesondere "Quiet Zone"
5 Synchronisierungsmuster
6 Formatkreis
7 Datenkreis
8 Datenkreis

## Patentansprüche

1. Verfahren zur Bestimmung der räumlichen Position eines Mobilteils, insbesondere eines auf einer Verfahrfläche einer Anlage verfahrbaren Mobilteils,
wobei das Mobilteil eine Kamera aufweist, mit welcher ein, insbesondere in der Anlage, stationär angeordneter Informationsträger detektierbar ist,
wobei der Informationsträger einen Datenbereich aufweist, welcher konzentrisch angeordnete kreisringförmige Spuren aufweist, insbesondere Darstellungen von Informationsbits aufweisende Spuren aufweist,
wobei der Informationsträger radial innerhalb des Datenbereichs konzentrisch angeordnete Kreisringe, insbesondere Kreise, aufweist,
**wobei der Datenbereich eine Identitätsinformation aufweist,**
**wobei** in einem ersten Verfahrensschritt vom Mobilteil aus, von der Kamera aus, ein Bild des Informationsträgers aufgenommen wird,
in einem zweiten Verfahrensschritt die Identitätsinformation bestimmt wird,
in einem dritten Verfahrensschritt aus einem Speicher des Mobilteils der Identitätsinformation zugeordnete Daten ausgelesen werden, wobei die Daten Information der räumlichen Position und räumlichen Ausrichtung des Informationsträgers in der Anlage aufweisen,
in einem vierten Verfahrensschritt aus dem aufgenommenen Bild die Werte der geometrischen Größen der Anordnung der radial innerhalb des Datenbereichs konzentrisch angeordneten Kreisringe und zumindest einer speziellen Umfangsposition des Datenbereichs des Informationsträgers bestimmt werden,
in einem fünften Verfahrensschritt aus den bestimmten Werten der geometrischen Größen und den aus dem Speicher gelesenen Werten der geometrischen Größen die relative räumliche Lage des Mobilteils zum Informationsträger bestimmt wird und unter Berücksichtigung der gespeicherten Werte der räumlichen Lage des Informationsträgers die Position des Mobilteils bestimmt wird,
**wobei der Informationsträger eben ausgeführt ist,**
**wobei die Kreisringe konzentrisch zu einer durch einen Mittelpunkt des Informationsträgers durchgehenden Normale der den Informationsträger aufnehmenden Ebene sind,**
**wobei die geometrischen Größen der radial innerhalb des Datenbereichs konzentrisch angeordneten Kreisringe deren im aufgenommenen Bild bestimmten Exzentrizität und größter Durchmesser sind,**
**wobei auf der radial innersten Spur des Datenbereichs** ein **Synchronisationsmuster angeordnet ist**
**und wobei auf der radial innersten Spur des Datenbereichs eine Information über den Wert der Bogenlänge der Darstellungen der Information in dem Datenbereich angeordnet ist,**
**wobei die Kreisringe in Umfangsrichtung jeweils unterbrechungsfrei ausgeführt sind,**
**wobei die geometrische Größe der speziellen Umfangsposition der Umfangswinkelwert der Umfangsposition ist,**
**wobei die spezielle Umfangsposition der in Umfangsrichtung größte oder kleinste Umfangswinkel des von dem Synchronisationsmuster überdeckten Umfangswinkelbereichs ist,**
**wobei die spezielle Umfangsposition radial außerhalb der Kreisringe angeordnet ist.**

2. Verfahren nach Anspruch 1,
**dadurch gekennzeichnet, dass**
**Umfangsrichtung, Umfangswinkel, Radialabstände auf die Normale bezogen sind.**

## Claims

1. Method for determining the spatial position of a mobile component, in particular of a mobile component that can travel on a travel surface of a facility,
wherein the mobile component comprises a camera by which an information carrier arranged in a stationary manner, in particular in the facility, can be detected,
wherein the information carrier comprises a data area that comprises concentrically arranged annular tracks, in particular comprises tracks having representations of information bits,
wherein the information carrier comprises annuli, in particular circles, arranged concentrically radially within the data area,
wherein the data area comprises a piece of identification information, wherein, in a first method step, an image of the information carrier is recorded from the mobile component, from the camera,
in a second method step, the identification information is determined,
in a third method step, data associated with the identification information are read out from a memory of the mobile component, wherein the data comprise information regarding the spatial position and spatial orientation of the information carrier in the facility,
in a fourth method step, the values of the geometric parameters of the arrangement of the annuli arranged concentrically radially within the data area and of at least one specific circumferential position of the data area of the information carrier are determined from the recorded image,
in a fifth method step, the relative spatial position of the mobile component in relation to the information carrier is determined from the determined values of the geometric parameters and from the values of the geometric parameters read out from the memory, and the position of the mobile component is determined by taking into account the stored values of the spatial position of the information carrier,
wherein the information carrier is configured in a planar manner,
wherein the annuli are concentric with a normal of the plane that accommodates the information carrier, said normal passing through a midpoint of the information carrier, wherein the geometric parameters of the annuli arranged concentrically radially within the data area are the eccentricity thereof determined in the recorded image and the largest diameter thereof,
wherein a synchronisation pattern is arranged on the radially innermost track of the data area,
and wherein a piece of information regarding the value of the arc length of the representations of the information in the data area is arranged on the radially innermost track of the data area,
wherein the annuli are each configured without any interruptions in the circumferential direction,
wherein the geometric parameter of the specific circumferential position is the circumferential-angle value of the circumferential position,
wherein the specific circumferential position is the largest or smallest circumferential angle, in the circumferential direction, of the circumferential-angle range covered by the synchronisation pattern,
wherein the specific circumferential position is arranged radially outside the annuli.

2. Method according to claim 1,
**characterised in that**
the circumferential direction, the circumferential angle and the radial distances are based on the normal.

## Revendications

1. Procédé de détermination de la position spatiale d'un élément mobile, en particulier d'un élément mobile pouvant être déplacé sur une surface de déplacement d'une installation,
l'élément mobile présentant une caméra grâce à laquelle un support d'informations agencé de manière stationnaire, en particulier au sein de l'installation, peut être détecté,
le support d'informations présentant une zone de données qui présentent des pistes annulaires agencées de manière concentrique, en particulier des représentations de pistes présentant des bits d'information,
le support d'informations présentant des anneaux, en particulier des cercles, agencés de manière concentrique et radiale à l'intérieur de la zone de données,
la zone de données présentant des informations d'identité,
une image du support d'informations étant reçu de l'élément mobile, à savoir de la caméra, lors d'une première étape de procédé,
les informations d'identité étant déterminées lors d'une deuxième étape,
des données associées aux informations d'identité étant lues à partir d'une mémoire de l'élément mobile lors d'une troisième étape de procédé, lesdites données présentant des informations sur la position spatiale et l'orientation spatiale du support d'informations au sein de l'installation,
les valeurs des grandeurs géométriques de l'agencement des anneaux agencés de manière concentrique et radiale à l'intérieur de la zone de données et d'au moins une position circonférentielle spéciale de la zone de données du support d'informations étant déterminées à partir de l'image capturée lors d'une quatrième étape de procédé, dans une cinquième étape, la position spatiale relative de l'élément mobile par rapport au support d'informations étant déterminée à partir des valeurs déterminées des grandeurs géométriques et des valeurs des grandeurs géométriques lues dans la mémoire et la position de l'élément mobile étant déterminée en tenant compte des valeurs stockées de la position spatiale du support d'informations,
le support d'informations étant réalisé de manière à être plan,
les cercles étant concentriques par rapport à une normale, passant par un centre du support d'informations, du plan contenant le support d'informations,
les grandeurs géométriques des anneaux agencés de manière concentrique et radiale à l'intérieur de la zone de données étant celles de leur excentricité et de leur plus grand diamètre, déterminés au sein de l'image capturée,
un motif de synchronisation étant agencé sur la piste radialement la plus intérieure de la zone de données
et une information sur la valeur de la longueur d'arc des représentations des informations dans la zone de données étant agencée sur la piste radialement la plus intérieure de la zone de données,
les anneaux étant réalisés respectivement sans interruption dans la direction circonférentielle,
la taille géométrique de la position circonférentielle spéciale étant la valeur angulaire circonférentielle de la position circonférentielle,
la position circonférentielle spéciale étant l'angle circonférentiel le plus grand ou le plus petit de la zone d'angle circonférentiel couverte par le motif de synchronisation,
la position circonférentielle spéciale étant agencée radialement à l'extérieur des anneaux.

2. Procédé selon la revendication 1,
**caractérisé en ce que**
la direction circonférentielle, l'angle circonférentiel et les distances radiales sont considérés par rapport à la normale.
